# EUROPEAN PATENT APPLICATION

(11) **EP 4 528 578 A1**
(43) Date of publication of application: **26.03.2025**
(21) Application number: 23382971.2
(22) Date of filing: 25.09.2023
(51) Int. Cl.: G06F 40/30, G06F 40/284, G06Q 30/06

(54) **AN AI PROMPT ENFORCEMENT METHOD, SYSTEM AND COMPUTER PROGRAMS**

(71) Applicant: Telefonica Innovacion Digital SL, 28050 Madrid (ES)
(72) Inventor: Lopez Coya, Pablo Ignacio, 28013 Madrid (ES); Rubio Viñuela, Yaiza, 28013 Madrid (ES)
(74) Representative: Carlos Hernando, Borja

(57) **Abstract**

An Al prompt enforcement method, system and computer program are provided. The method comprises receiving, from a prompt generator, an Al prompt for the Al model; performing a natural language processing analysis over the received Al prompt to recognize features thereof; selecting an enforcement policy, comprising conditions for the Al prompt, from the stored enforcement policies, and attach the conditions to the Al prompt using the dedicated smart contract; registering the Al prompt to a decentralized and distributed network using the smart contract, providing a validated Al prompt as a result; receiving a request to execute the validated Al prompt from a prompt executor; checking if the prompt executor satisfies the enforcement policy; and forwarding the Al prompt to the Al-based model only if the selected enforcement policy is satisfied by the prompt executor.

## Description

### Technical Field

The present invention relates to an Artificial Intelligence (Al) prompt enforcement method. The invention also relates to a system and to a computer program for AI prompt enforcement.

### Background of the Invention

A large learning model (LLM) refers to a powerful and sophisticated machine learning model that can process and understand vast amounts of data in order to perform complex tasks. These models are typically designed to handle a wide range of natural language processing (NLP) tasks, such as language translation, text generation, question answering, sentiment analysis, and more.

Large learning models are built using deep learning techniques, specifically utilizing deep neural networks with a high number of layers and parameters. These models are trained on massive datasets, often consisting of billions of text samples, to learn patterns, relationships, and representations within the data. The training process involves optimizing the model's parameters through a technique called gradient descent, which minimizes the error between predicted and actual outputs.

The use of these models by users is performed by means of AI prompts, which is any form of text, question, information, or coding that the user communicates to the AI model to indicate what response the user is looking for. AI prompts are frequently used in a wide range of applications, including chatbots, virtual assistants, content generation, translation systems, and more. In other words, by providing an appropriate prompt, users can elicit more accurate and relevant responses from Al models, enhancing the effectiveness and usefulness of Al-powered systems.

One prominent example of a large learning model is OpenAI's GPT (Generative Pretrained Transformer) series, with GPT-3 being one of the most notable versions. These models have achieved impressive performance on various language-related tasks and have demonstrated the ability to generate coherent and contextually relevant text.

Large learning models have significant computational requirements due to their complexity and size, often requiring powerful hardware and specialized infrastructure for training and inference. However, they have the advantage of capturing intricate language nuances and can generate more human-like responses compared to earlier, smaller models.

ChatGPT, developed by OpenAl, was commercially launched on November 30, 2020. OpenAI introduced a subscription plan called ChatGPT Plus, which provided users with benefits such as general access to ChatGPT during peak times, faster response times, and priority access to new features and improvements. This marked an important milestone in making the ChatGPT technology available to a wider audience for various applications and use cases.

This powerful language model has had a significant social impact since its development. Some of the key social impacts caused by ChatGPT are:
- Accessibility to Information: ChatGPT has improved accessibility to information by providing instant responses to queries and facilitating conversations. It has the potential to bridge the knowledge gap for users who may not have access to certain resources or expertise.
- Language and Cultural Exchange: ChatGPT's ability to communicate in multiple languages has facilitated language learning and cross-cultural interactions. Users can engage with the model to practice conversational skills and gain exposure to different perspectives and cultures.
- Automation of Tasks: ChatGPT can assist in automating certain tasks, such as customer support, content generation, and data analysis. This can streamline operations for businesses and organizations, increasing efficiency and productivity.
- Ethical Concerns: The use of ChatGPT has raised ethical concerns related to misinformation, bias, and malicious use. The model can inadvertently generate inaccurate or misleading information, and it can amplify existing biases present in the training data. There is an ongoing need to address these issues and ensure responsible deployment of Al technologies.
- Mental Health Support: ChatGPT has been used to provide mental health support, offering a listening ear and resources for those in need. While it is not a substitute for professional help, it has demonstrated potential as a tool for emotional support and guidance.
- Privacy and Security: The use of ChatGPT raises concerns about privacy and security, as sensitive information shared during conversations could be stored or accessed. Safeguarding user data and implementing secure practices are crucial to mitigate potential risks.
- Job Market and Skills Shift: The adoption of AI technologies like ChatGPT may impact the job market, with potential shifts in the demand for certain roles. There is a need for individuals to adapt and acquire new skills to remain relevant in an evolving landscape.

Overall, ChatGPT's social impact is a complex interplay of benefits, challenges, and ethical considerations. Continued research, regulation, and responsible use are essential to maximize its positive effects while mitigating potential risks.

Besides the above, Al-based prompts when used to generate content in the style of original authors, may cause various impacts on the authors themselves, for instance:
- Recognition and Exposure: Having their style imitated or emulated through prompting can bring increased recognition and exposure to original authors. It allows their unique voice and writing style to reach a wider audience, potentially leading to increased popularity and a broader readership.
- Artistic Influence: Seeing their style replicated by others can be both flattering and inspiring for original authors. It reinforces their influence on the literary world and may encourage them to further develop and refine their craft.
- Copyright and Plagiarism Concerns: Prompting execution with an author's style raises questions regarding intellectual property and copyright. If the content generated is used without proper attribution or permission, it can be perceived as a violation of the original author's rights. It is important to respect copyright laws and ethical considerations when utilizing an author's style.
- Creative Exploration: The act of imitating an author's style through prompting can provide an opportunity for authors to explore new ideas and perspectives. It allows them to experiment with different narrative techniques, character development, or storytelling approaches, potentially leading to personal growth and expanded creative horizons.
- Quality and Authenticity: While prompting can mimic an author's style to some extent, it may not capture the full essence or depth of their writing. Original authors may be concerned that the generated content lacks the authenticity and subtleties that define their work. They may worry that their distinct voice and unique storytelling elements are difficult to replicate accurately.

However, the impact on original authors due to prompting execution with their style can vary. It may bring recognition, inspiration, and creative exploration, but also raises concerns about copyright and the potential dilution of their unique artistic expression.

As an early and preventive solution, governments or regulatory bodies in certain countries are proposing to impose restrictions on the use or access to AI technologies like ChatGPT. These restrictions can be driven by various factors, including concerns related to content control, privacy, security, or the potential impact on society.

Prohibiting ChatGPT or any AI technology in a country may involve measures such as blocking access to the model's servers or imposing legal restrictions on its usage. Governments might enforce these prohibitions through legislation, regulations, or licensing requirements.

It is worth noting that Al-related regulations can vary widely from country to country, and their specific impact on ChatGPT depends on the context and goals of those regulations. OpenAl, as the organization behind ChatGPT, may also have policies in place regarding the availability or usage of its services in certain jurisdictions.

To obtain accurate and up-to-date information on any specific prohibitions or restrictions related to ChatGPT in a particular country, it is advisable to refer to official government statements, legal documents, or consult with legal professionals who specialize in AI and technology regulations.

Other important uses of AI prompts refer to generative services that rely on images, videos, audio and even software. Some examples of the most relevant generative services regarding images are:
- DeepArt: An online platform that uses neural networks to transform photos into artwork, allowing users to apply various artistic styles to their images.
- DeepDream: A neural network visualization technique developed by Google that generates dream-like images by modifying and enhancing existing images based on patterns learned by deep learning models.
- DALL-E: An AI model developed by OpenAI that generates unique images from textual descriptions. It can create novel and imaginative visuals based on textual prompts.
- DeepFakes: Although controversial, DeepFakes refers to AI techniques that generate realistic and convincing fake images or videos by swapping faces or altering visual content. It has raised concerns regarding misinformation and ethical implications.
- DeepArt Effects: Similar to DeepArt, this service allows users to transform their photos using various artistic filters, creating visually appealing effects.

### Description of the Invention

The perpetual conflict between the option to ban or limit the use of emerging technologies, such as Al, and the potential benefits offered by such technologies presents a pressing challenge in contemporary society. Present invention aims to explore the intricacies of this dichotomy, highlighting the transformative potential of advanced technological solutions. By synthesizing the principles of freedom of expression and the advantages of cutting-edge technology, the invention proposes a harmonized approach to strike a balance between preserving fundamental rights and leveraging state-of-the-art tools for AI content generation.

To that end, the present invention proposes, according to one aspect, an AI prompt enforcement method that comprises: receiving, by a processor, an AI prompt for an Al-based model (e.g. a chatbot, a virtual assistant, a content generator, a translation system, etc.) from a prompt generator; performing, by a processor, a natural language processing analysis over the received AI prompt to recognize some features thereof, said features including one or more of the following: entities involved, an intention behind the prompt, a context involved in the generative process of the prompt, and/or an overall sentiment of the prompt; selecting, by a processor, an enforcement policy, comprising one or more conditions for the AI prompt, from a plurality of enforcement policies, and attaching the one or more conditions to the AI prompt using a dedicated smart contract; registering, by a processor, the AI prompt as a digital asset to a decentralized and distributed network, e.g. a public blockchain, using the dedicated smart contract, providing a validated AI prompt as a result of said registration; receiving, by a processor, a request to execute the validated AI prompt from a prompt executor; checking, by a processor, if the prompt executor satisfies the selected enforcement policy; and forwarding, by a processor, the validated AI prompt to the Al-based model only if the selected enforcement policy is satisfied by the prompt executor.

Present invention also proposes, according to another aspect, a system for AI prompt enforcement, comprising one or more processors; an Al-based model (e.g. a chatbot, a virtual assistant, a content generator, a translation system, etc.); a memory or database to store enforcement policies (which can be referred of policy stack); a decentralized and distributed network (e.g. a blockchain network); and a dedicated smart contract. The one or more processors are configured to: receive, from a prompt generator, an AI prompt for the AI model; perform a natural language processing analysis over the received AI prompt to recognize some features thereof, said features including one or more of the following: entities involved, an intention behind the prompt, a context involved in the generative process of the prompt, and/or an overall sentiment of the prompt; select an enforcement policy, comprising one or more conditions for the AI prompt, from the stored enforcement policies, and attach the one or more conditions to the AI prompt using the dedicated smart contract; registering the AI prompt as a digital asset to the decentralized and distributed network using the dedicated smart contract, providing a validated AI prompt as a result; receive a request to execute the validated AI prompt from a prompt executor; check if the prompt executor satisfies the selected enforcement policy; and forward the validated AI prompt to the Al-based model only if the selected enforcement policy is satisfied by the prompt executor.

According to the invention, the AI prompt can be registered to the decentralized and distributed network as a digital token, particularly as a non-fungible toke (NFT) such as ERC-721, being the prompt generator registered as the owner of said token.

Therefore, the present invention provides an AI prompt enforcement mechanism based on decentralized and distributed technology, e.g. blockchain, and in some embodiments on digital tokens, that guarantees that specific conditions are met before the execution of the AI prompt may occur.

In some embodiments, the checking step comprises selecting, by the prompt executor, the validated AI prompt from a decentralized application operating on said decentralized network; and applying, by the dedicated smart contract, the one or more attached conditions and retrieving relevant data to satisfy the selected enforcement policy from the decentralized and distributed network.

In some embodiments, the checking step also comprises initiating, by the decentralized application, a dialog with the prompt executor to satisfy a royalty clause, the validated AI prompt being forwarded only after obtaining approval for royalty compensation from the prompt executor.

In some embodiments, the checking step also comprises initiating, by the decentralized application, a dialog with the prompt executor to verify professional credentials of the prompt executor, the validated AI prompt being forwarded only after having verified that the prompt executor qualifies as a given professional. For instance, if the prompt is related to generating a nutritional diet or recipe it is checked whether the prompt executor qualifies as a medical/ nutritionist professional or the like.

In some embodiments, the AI prompt is made in plain text format.

According to the invention, the prompt generator and the prompt executor can be the same individual or different individuals.

Moreover, the AI prompt can comprise a text, a question, an information, and/or a coding that the prompt generator communicates to the Al-based model to indicate what response the prompt generator is looking for.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Particularly, the invention can use the original plaintext of an AI prompt as the key asset for a minting process. Moreover, a set of smart contracts (referred as the Smart Contract layer) can be also used to translate an enforcement policy into a set of programmatic rules that will be operational in a blockchain or the like. The invention proposes a mechanism where each enforcement policy can be defined in a dedicated smart contract so a different kind of logic to unlock the AI prompt is applied during the digital token minting. The result is the registration of the plain text AI prompt to a decentralized and distributed network using the dedicated smart contract which solely unlocks the underlying asset if the set of conditions defined in the corresponding smart contract are fully satisfied.

Consequently, present invention provides a harmonized approach that reconciles the need for regulating the use of AI solutions with the benefits offered by state-of-the-art technology. It emphasizes the importance of preserving fundamental rights, such as freedom of expression, while harnessing advanced algorithms and automated systems to enable certain degree of control and moderation for AI prompting execution. It strikes a balance that upholds societal values and leverages technological advancements for responsible information governance.

While it's important to note that the impact of AI on fundamental rights can vary depending on the specific context and implementation, here are some fundamental rights that may be affected:
- Privacy: Generative AI systems can analyze and generate vast amounts of data, including personal information. If not properly regulated, it may lead to breaches of privacy and unauthorized use of personal data.
- Freedom of expression: Al-generated content can be used to spread false information, propaganda, or hate speech, potentially undermining the freedom of expression and contributing to the proliferation of misinformation.
- Intellectual property rights: Generative AI can be utilized to create realistic imitations of copyrighted works, raising challenges related to intellectual property rights and potentially impacting artists, content creators, and innovators.
- Reputation and identity: Misuse of Generative AI may lead to the creation of deepfakes or synthetic media that can damage an individual's reputation or impersonate someone else, thus undermining their right to a fair and accurate representation of their identity.
- Non-discrimination and equality: Biases present in training data or in the algorithms themselves can be amplified through Generative Al, leading to discriminatory outcomes in areas such as hiring, lending, or judicial decisions, potentially infringing upon the principles of non-discrimination and equality.
- Due process and fairness: If Al systems are used in decision-making processes, such as in criminal justice or employment, without transparency or accountability, it can undermine the right to due process and fairness, as individuals may not have the ability to challenge or understand the basis of automated decisions.
- Autonomy and agency: Uncontrolled use of Generative AI may reduce individual autonomy by shaping people's choices, preferences, and behavior through targeted and manipulative content, potentially interfering with their ability to make independent decisions.
- Safety and security: AI systems, if not properly secured, can be vulnerable to exploitation and malicious uses, posing risks to individuals' safety, cybersecurity, and overall societal security.

Likewise, the present invention poses a technologically viable option to the controlled execution of prompts based on Al. The alternative today to mitigate the social risk of inappropriate use of this technology is the prohibition of the service.

In particular, Natural Language Processing analysis applied to the prompt text allows inferring the context, intent, and entities involved in the potential outcome of the AI service. In this way enforcement mechanisms are generated that allow resolving the counterparts and collateral damage of the use of the prompt. Some examples of potential solutions are:
- Ensure Intellectual Property Rights are respected (e.g. by charging royalties) when the AI prompt intends to use an author's style to create a text, image, video or piece of music
- Verification of appropriate credentials as a qualified medical professional when the AI prompt is intended to generate an average recipe or nutritional diet
- Verification of adequate credentials as a qualified professional as a journalist when the AI prompt aims to generate an editorial article.
- Respecting registered trademarks in the generation of prompts. This way registered trademarks would be protected anytime someone is using elements of their brands to generate commercial content (i.e.: "Please, create a commercial spot as if you work for Coca Cola"), ensuring that this use is allowed by the owners of the trademark and according to their brand guidelines.

### Brief Description of the Drawings

The previous and other advantages and features will be more fully understood from the following detailed description of embodiments, with reference to the attached figures, which must be considered in an illustrative and non-limiting manner, in which:
Fig. 1 schematically illustrates the AI prompt validation and registration stage, according to an embodiment of the present invention.
Fig. 2 schematically illustrates the AI prompt controlled execution stage, according to an embodiment of the present invention.
Figs. 3A and 3B show an embodiment on how the dedicated smart contract applies the rules/conditions, and retrieves the relevant data to satisfy the selected enforcement policy from the decentralized and distributed network.
Fig. 4 graphically shows how the prompt executor is requested to authorize a royalty payment as a precondition to unlock the AI prompt, according to an embodiment of the present invention.
Fig. 5 graphically shows how the NLP analysis is applied over the received AI prompt, after which, the enforcement policy is selected.
Fig. 6 graphically shows the logical layer based on a smart contract that is responsible for executing the enforcement logic whenever a user tries to execute a validated AI prompt in such a way that the invention will only expose the original prompt if each of the rules/conditions stated in the smart contract are satisfied.

### Detailed Description of the Invention and of Preferred Embodiments

The present invention defines a framework by which compliance with certain policies related to the respect of the above-mentioned fundamental rights is controlled. Moreover, the invention presents a specific approach so that only AI based prompt requests that have been qualified as "fair", that is, that fulfill a series of rules/conditions, are eligible to be executed by a Generative AI Service Provider/Model.

The proposed AI prompt enhancement solution can be splitted into two stages: 1) AI prompt validation and registration; 2) AI prompt controlled execution.

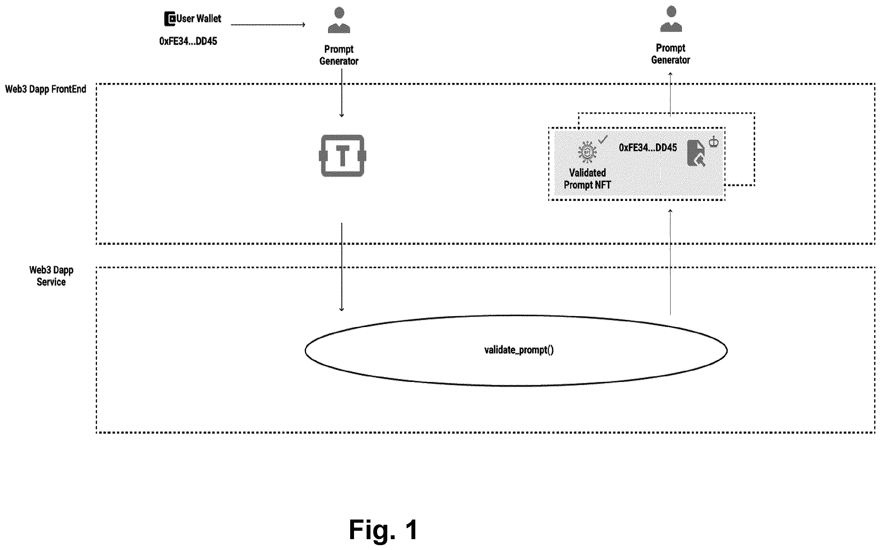

In the first stage, see Fig. 1, an AI prompt is received from a prompt generator. Particularly, the AI prompt is generated in plain text format, and refers to the input or instruction provided to an Al-based model or system to generate a response or perform a specific task, and it serves as the initial input that guides the AI in producing the desired output. The AI prompt can vary in length and complexity, ranging from a single sentence to a paragraph or more. It can be a specific question, a partial sentence, or a full dialogue. The quality and clarity of the prompt significantly influence the output generated by the AI model, as it shapes the context and constraints within which the model operates. It's important to note that the AI prompt is a crucial component in guiding the AI system's behavior, but it's not the sole factor. The model's underlying architecture, training data, and other factors also influence the generated response.

Secondly, a natural language processing analysis is launched over the AI prompt to understand certain aspects/features thereof such as, entities involved, the intention behind the prompt, the context involved in the generative process, and/or the overall sentiment of the paragraph. Once the AI prompt has been analyzed in terms of lexical comprehension, an enforcement policy is selected. The enforcement policy contains the corresponding rules/conditions for the AI prompt and is programmatically attached to the AI prompt using a dedicated smart contract.

As the final step of the first stage, the prompt generator is registered to a decentralized and distributed network, e.g. a public blockchain,. The resulting outcome is a validated AI prompt registered to a decentralized and distributed network as a new kind of digital asset. The new value added comes from the fact that future executions of the validated AI prompt will not be possible until every single rule/condition stated in the smart contract is fully satisfied.

Optionally the validated AI prompt is registered in the decentralized and distributed network by minting a non-fungible token (NFT), such as an ERC-721.

Since the registration mechanism is based on decentralized and distributed technology, particularly on blockchain techniques, the prompt generator must register to a decentralized wallet with a public address. This public address will be used by the invention to recognize the prompt generator as the official owner of the digital asset holding the validated AI prompt. A decentralized wallet, also known as a Web3 wallet or blockchain wallet, is a digital wallet that enables users to securely store, manage, and interact with their cryptocurrencies and other digital assets within the Web3 ecosystem. Unlike traditional wallets, which are usually operated by centralized entities like banks or online exchanges, Web3 wallets provide users with direct control over their funds and data. They leverage the power of blockchain technology and smart contracts to ensure security, transparency, and user autonomy.

Some of the key features and characteristics of Web3 wallets are:
- Decentralization: Web3 wallets operate on decentralized networks, such as blockchain platforms like Ethereum or Polkadot. This means that there is no central authority controlling the wallet or the user's assets.
- Private key management: Web3 wallets generate and store cryptographic private keys, which are used to access and authorize transactions. These private keys are typically encrypted and securely stored on the user's device, providing them with full control over their funds.
- Interoperability: Web3 wallets are designed to be compatible with various decentralized applications (Dapps) and blockchain protocols. Users can seamlessly connect their wallets to interact with different services, such as decentralized exchanges, lending platforms, gaming applications, and more.

- User-centric control: With Web3 wallets, users have complete ownership and control over their assets. They can initiate transactions, manage their portfolio, and interact with Dapps without the need for intermediaries or centralized authorities.
- Enhanced security: Web3 wallets prioritize security through the use of encryption, multi-factor authentication, and other advanced security measures. They also provide users with the ability to review and approve every transaction before it is executed, adding an extra layer of protection.
- Cross-device accessibility: Web3 wallets are often available as browser extensions, mobile apps, or even hardware devices. This allows users to access their funds and interact with the Web3 ecosystem across multiple devices securely.

It's important to note that the Web3 ecosystem aims to empower individuals with greater control and ownership over their digital assets, and Web3 wallets play a crucial role in achieving this vision.

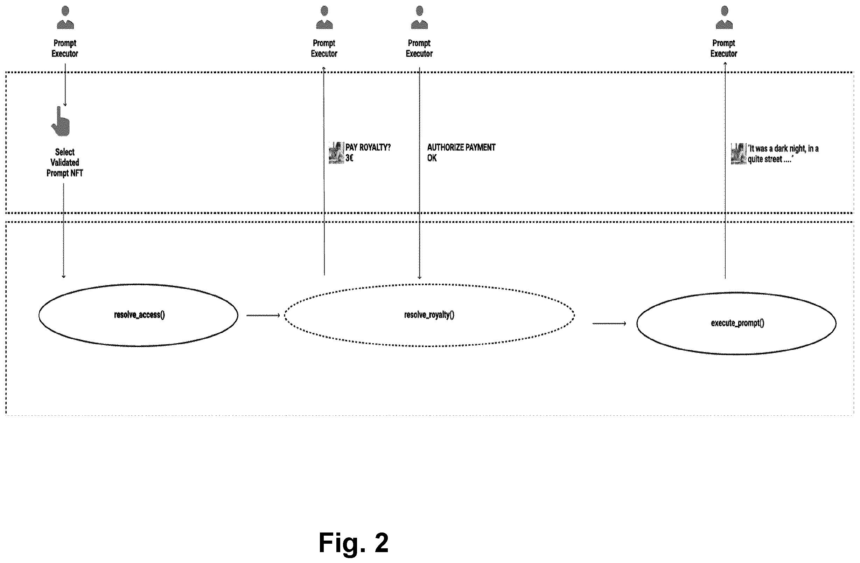

With regard now to the second stage, which takes place when intending to execute the validated AI prompt by a prompt executor, it is checked if the prompt executor satisfies the different rules/conditions (i.e.: royalty payments, professional credentials, governmental identity, etc.) of the enforcement policy applied to the original prompt. The corresponding interactive dialog will guide the prompt executor to the process so once the whole policy is satisfied, the validated AI prompt stored in the blockchain will be released, particularly, in plain text format. The result at the end is a valid AI prompt ready to be executed by the AI model/service provider. Fig. 2 illustrates an embodiment of this second stage.

Moreover, the prompt executor can look into a decentralized application, for example, a Dapp, i.e. a type of software application that operates on the decentralized network, typically using blockchain technology, for a validated AI prompt in it. Once the validated AI prompt is selected, a resolve_access () method can query the dedicated smart contract for the rules/conditions that should be met by the prompt executor to extract the original AI prompt.

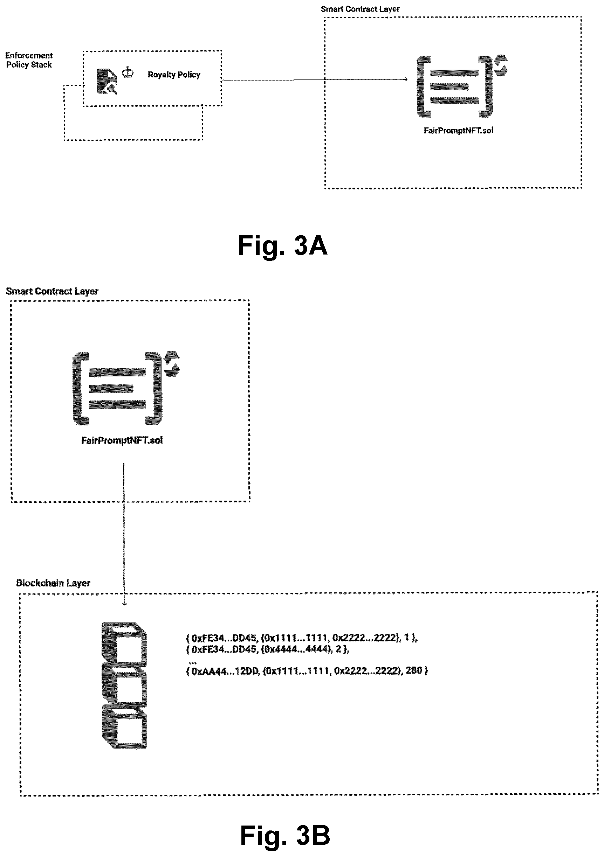

Figs. 3A and 3B show how the dedicated smart contract applies programmatically (e.g. as logical rules) the access rules/conditions and retrieves, from the decentralized and distributed network, relevant data to satisfy the selected enforcement policy.

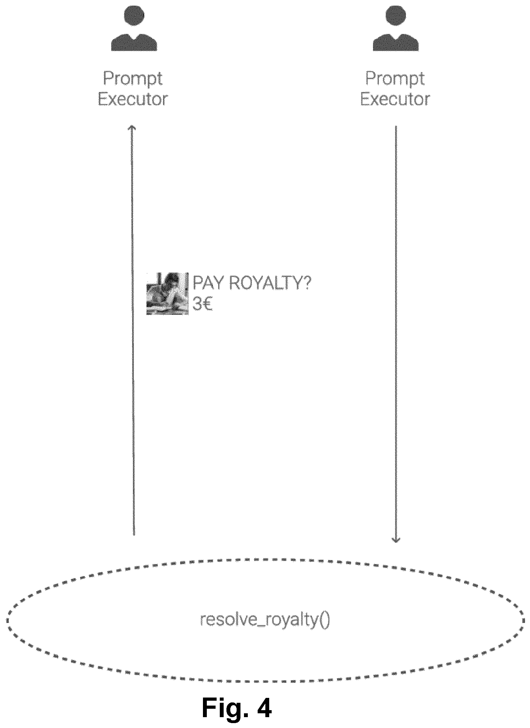

In some embodiments, in particular in case that the enforcement policy is related to royalty payments, the application layer launches a dialog with the prompt executor to satisfy the royalty clauses. Fig. 4 show how the prompt executor is requested to authorize a royalty payment as a precondition to unlock the AI prompt.

Note that there are two different roles using the method, each involved in a different stage of the process. The prompt generator, i.e. the individual/user who wants to apply an enforcement policy to an AI prompt, , and the prompt executor, i.e. the individual/user that wants to execute the prompt and will have to meet the enforcement policy as part of the execution conditions previously defined in the smart contract layer. Once the user satisfies every rule/condition stated in the enforcement policy the corresponding AI prompt will be unlocked and ready to be executed by the AI model. It is important to also note that both the prompt generator and the prompt executor do not necessarily be the same individual.

In the present invention, the inference service is based on natural language processing (NLP) techniques. NLP is a field of study focused on enabling computers to understand, interpret, and generate human language. An NLP module typically refers to a software component or system that incorporates various algorithms and techniques to process and analyze natural language data.

The primary goal of an NLP module is to bridge the gap between human language and computer understanding. Here are some common tasks that an NLP module can perform:
- Text Classification: Classifying text into predefined categories or labels. For example, sentiment analysis, spam detection, or topic categorization.
- Named Entity Recognition (NER): Identifying and classifying named entities in text, such as names of people, organizations, locations, dates, or other specific entities.
- Part-of-Speech (POS) Tagging: Assigning grammatical tags to words in a sentence, such as noun, verb, adjective, or adverb.
- Language Modeling: Predicting the likelihood of a given sequence of words to occur in a particular language. Language models are often used for tasks like text generation, machine translation, or speech recognition.
- Sentiment Analysis: Determining the sentiment or opinion expressed in a piece of text, whether it's positive, negative, or neutral.
- Question Answering: Understanding questions posed in natural language and providing relevant answers based on the content of a given knowledge base or document.
- Machine Translation: Translating text from one language to another, enabling communication across language barriers.
- Text Summarization: Generating concise summaries of longer texts, condensing the main ideas and important information.
- Chatbot and Virtual Assistants: Building conversational agents that can understand and respond to natural language inputs, providing automated assistance or engaging in dialogue.

NLP modules typically employ techniques such as statistical models, machine learning algorithms, deep learning architectures, and linguistic rules to process and understand natural language data. Particularly, in the present invention, the NLP module will be focus on a subset of tasks such as Named Entity Recognition (NER). The goal of entity analysis is to extract and categorize these named entities from unstructured text data, enabling further analysis and understanding of the information. By identifying and classifying named entities, NER allows for a deeper comprehension of the text and facilitates various downstream applications, such as information retrieval, question answering, information extraction, and knowledge graph construction.

The process of entity analysis typically involves the following steps:
- Tokenization: Breaking the text into individual words or tokens.
- Part-of-Speech (POS) Tagging: Assigning grammatical tags to each word in the text, such as noun, verb, adjective, or adverb.
- Chunking: Identifying and grouping consecutive tokens with specific grammatical patterns to form meaningful phrases, such as noun phrases or verb phrases.
- Named Entity Recognition: Analyzing the chunks of text to identify named entities by applying machine learning or rule-based techniques. This involves classifying tokens or sequences of tokens into predefined categories, such as person names, organization names, locations, dates, or numerical expressions.
- Entity Classification: Assigning a specific type or class to each identified named entity. For example, distinguishing between a person's name and an organization's name.

Entity analysis plays a crucial role in various NLP applications, such as information extraction, search engines, recommendation systems, and text summarization. By automatically identifying and categorizing named entities, systems can extract valuable information from text, establish relationships between entities, and provide more accurate and meaningful insights to users.

On the other hand, intent analysis, also known as intent recognition or intent classification, is a task within Natural Language Processing (NLP) that focuses on understanding the underlying intention or purpose behind a given text or user query. The goal of intent analysis is to determine the specific intent or goal that a user wants to achieve through their input.

In the context of conversational systems or chatbots, intent analysis is crucial for effectively understanding user requests and providing appropriate responses. By identifying the intent, the system can route the user's query to the relevant functionality or take the appropriate action.

The process of intent analysis typically involves the following steps:
- Text Preprocessing: Preprocessing the input text by tokenizing, removing stopwords, and performing other normalization techniques.
- Feature Extraction: Transforming the preprocessed text into a numerical representation that machine learning algorithms can understand. This may involve techniques such as word embeddings or bag-of-words representations.
- Training Data Preparation: Creating a labeled dataset where each input text is associated with a corresponding intent label. This dataset is used to train a machine learning or deep learning model.
- Model Training: Training a classifier or a neural network model on the labeled dataset to learn the mapping between the input text and the corresponding intent labels. This step involves training the model to recognize patterns and features that are indicative of specific intents.
- Intent Classification: Applying the trained model to unseen input text to predict the intent label. The model assigns a probability distribution over predefined intent categories, allowing for the selection of the most likely intent.
- Post-processing and Response Generation: Once the intent is identified, the system can use the intent label to trigger the appropriate action or generate a relevant response to fulfill the user's request.

Intent analysis is essential for building intelligent conversational systems, virtual assistants, and chatbots that can understand user queries and provide meaningful responses. By accurately recognizing the intent, these systems can effectively assist users, perform actions, or direct queries to the relevant functionality, enhancing the overall user experience.

Sentiment analysis, also known as opinion mining, is a branch of Natural Language Processing (NLP) that focuses on determining the sentiment or subjective opinion expressed in a given piece of text. The goal of sentiment analysis is to analyze text data, such as reviews, social media posts, or customer feedback, and classify it as positive, negative, or neutral based on the underlying sentiment.

The process of sentiment analysis typically involves the following steps:
- Text Preprocessing: Preprocessing the text by removing noise, punctuation, and stopwords. This step may also include techniques such as tokenization and stemming/lemmatization to convert the text into a suitable format for analysis.
- Sentiment Lexicon Creation: Building or utilizing a sentiment lexicon, which is a collection of words or phrases associated with sentiment polarities. This lexicon includes positive and negative words, as well as possibly neutral words.
- Sentiment Scoring: Assigning sentiment scores to words or phrases in the text based on their presence in the sentiment lexicon. Positive words are assigned positive scores, negative words are assigned negative scores, and neutral words are assigned a neutral score.
- Aggregation: Combining the sentiment scores of individual words or phrases to obtain an overall sentiment score for the text. Various aggregation methods can be employed, such as taking the average score or using more sophisticated techniques like machine learning models or neural networks.
- Sentiment Classification: Assigning a sentiment label to the text based on the aggregated sentiment score. Common labels include positive, negative, or neutral, but more fine-grained classifications such as very positive or slightly negative can also be used.

Sentiment analysis has numerous applications, including brand monitoring, customer feedback analysis, social media monitoring, and market research. It allows businesses to gain insights into public opinion, customer satisfaction, and sentiment trends, enabling them to make data-driven decisions and improve their products or services based on feedback. Additionally, sentiment analysis can be used for personalized recommendations, content filtering, or even automated response generation in chatbots or virtual assistants.

Context inference, in the context of Natural Language Processing (NLP), refers to the process of understanding and inferring the contextual information that surrounds a given piece of text. It involves analyzing the text itself, along with its surrounding context, to derive a deeper understanding of the intended meaning.

Context inference takes into account various factors, such as the preceding and following sentences, the overall discourse, the background knowledge, and the situational context. It helps to disambiguate ambiguous words or phrases, resolve pronoun references, and capture the underlying meaning that goes beyond the literal interpretation of the text.

Here are some key aspects of context inference:
- Co-reference Resolution: Resolving pronouns or other referring expressions to identify the entities they refer to. This involves understanding the context and using syntactic and semantic information to establish the correct references.
- Coreference chains: Establishing chains of references within a text to maintain consistency and understanding. For example, identifying that "John" in one sentence and "he" in a subsequent sentence refer to the same person.
- Discourse Analysis: Analyzing the relationships between sentences or utterances within a discourse. This involves understanding the discourse structure, discourse markers, and the flow of information to infer the intended meaning and the connections between different parts of the text.
- Anaphora Resolution: Resolving anaphoric references, which are references to previously mentioned entities or concepts. This process involves linking pronouns, definite descriptions, or other anaphoric expressions to their antecedents.
- Semantic Role Labeling: Identifying the semantic roles of entities and their relationships within a sentence. This helps to infer the roles and interactions of different entities in the context of the text.
- Pragmatic Inference: Making pragmatic inferences by considering the speaker's intentions, implicatures, and contextual cues. Pragmatic inference involves understanding implied meanings, sarcasm, irony, or other forms of indirect communication.

Context inference is crucial in NLP tasks such as machine translation, question answering, summarization, and dialogue systems. By inferring the surrounding context, NLP models can generate more accurate and meaningful responses, understand the speaker's intentions, and provide contextually appropriate information.

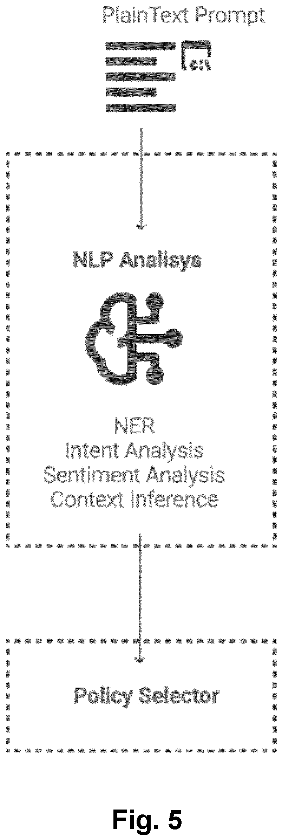

Fig. 5 shows how the NLP module/software/processor receives an AI Prompt in Plain text format to be processed. After the corresponding analysis a predefined task is triggered that looks for a suitable policy to apply over the prompt.

With regard to the enforcement policy selection, once the original AI prompt is successfully analyzed (e.g. by the NLP Intent Recognizer block/unit), the output will concisely provide information about the actual purpose behind the prompt execution. In addition, another NLP block/unit can be dedicated to intent classification where mainly a pretrained model assigns a probability distribution over predefined intent categories, allowing for the selection of the most likely intent. To adapt the classification process, a specific dictionary can be created where each category is referred to a predefined enforcement policy. This collection of available enforcement policies can be referred to as policy stack. The way an enforcement policy is selected is based on the matching of the previous intent with a set of preselected words specially defined in the semantic context of each enforcement policy.

For example, if the recognized intent is "Compose a piece of music", the words of the semantic context may include: Generate, Invent, Conceptualize, Design, Develop, Construct, Imagine, Formulate, Craft, Build, Produce, Fabricate, Engineer, Author, Compose, Originate, Devise, Manufacture, Realize, Shape, Sculpt, Draft, Blueprint, Prototype, Assemble, being the enforcement policy for this case RoyaltyPayment. In another example, if the recognized intent is "Recommend medicine for muscle pain", the words of the semantic context may include: Diagnose, Assess, Evaluate, Examine, Analyze, Study, Investigate, Consult, Recommend, Prescribe, Propose, Suggest, Advise, Administer, Monitor, Adjust, Follow-up, Treat, Manage, being the enforcement policy for this case ProfessionalCredentialsApproval.

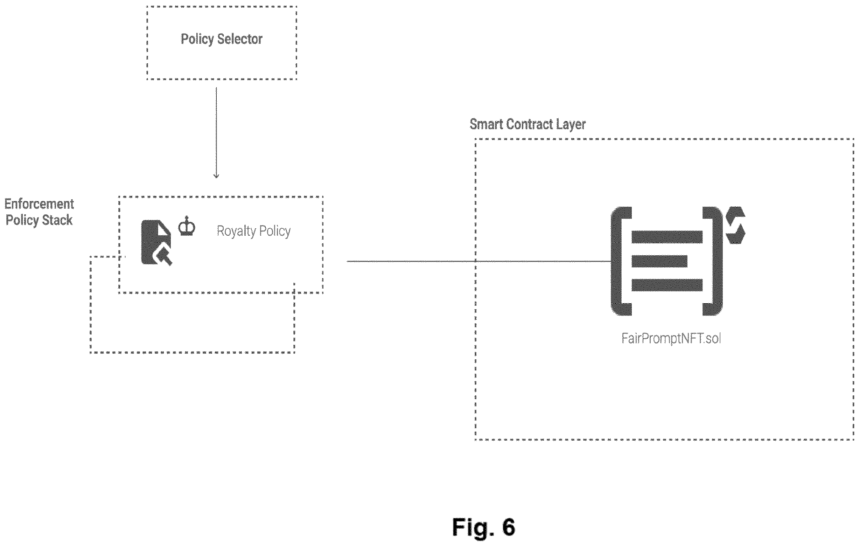

The present invention exposes a collection of available enforcement policies, thus, eligible predefined policies with the corresponding translation into a smart contract. It is worth mention that in order to add new ways of fair execution of AI prompts and depending on the level of restriction to be applied, the following actions are performed: 1) an enforcement policy is defined, 2) the resulting set of rules/conditions are incorporated to the dedicated smart contract, 3) the corresponding semantic logic is added to the NLP engine. The previous actions permit to increase the policy stack (see Fig. 6) and therefore the overall functionality of the system.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Nonvolatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. An Artificial Intelligence (Al) prompt enforcement method, comprising:
receiving, by a processor, an AI prompt for an Al-based model from a prompt generator;
performing, by a processor, a natural language processing analysis over the received AI prompt to recognize some features thereof, said features including one or more of the following: entities involved, an intention behind the prompt, a context involved in the generative process of the prompt, and/or an overall sentiment of the prompt;
selecting, by a processor, an enforcement policy, comprising one or more conditions for the AI prompt, from a plurality of enforcement policies, and attaching the one or more conditions to the AI prompt using a dedicated smart contract;
registering, by a processor, the AI prompt as a digital asset to a decentralized and distributed network using the dedicated smart contract, providing a validated AI prompt as a result of said registration;
receiving, by a processor, a request to execute the validated AI prompt from a prompt executor;
checking, by a processor, if the prompt executor satisfies the selected enforcement policy; and
forwarding, by a processor, the validated AI prompt to the Al-based model only if the selected enforcement policy is satisfied by the prompt executor.

2. The method of claim 1, wherein said checking step comprises:
selecting, by the prompt executor, the validated AI prompt from a decentralized application operating on said decentralized network; and
applying, by the dedicated smart contract, the one or more attached conditions and retrieving relevant data to satisfy the selected enforcement policy from the decentralized and distributed network.

3. The method of claim 2, further comprising:
initiating, by the decentralized application, a dialog with the prompt executor to satisfy a royalty clause, the validated AI prompt being forwarded only after obtaining approval for royalty compensation from the prompt executor, or
initiating, by the decentralized application, a dialog with the prompt executor to verify professional credentials of the prompt executor, the validated AI prompt being forwarded only after having verified that the prompt executor qualifies as a given professional.

4. The method of any one of the previous claims, wherein the enforcement policy being selected based on the matching of a recognized intent of the AI prompt with a set of preselected words, the latter being defined in a semantic context of the enforcement policy.

5. The method of any one of the previous claims, wherein the registration of the AI prompt as a digital asset, further comprises encapsulating the AI prompt in a digital token by minting the digital token to a decentralized and distributed network using the dedicated smart contract, the prompt generator being registered to said decentralized and distributed network as the owner of the digital token.

6. The method of claim 5, wherein the digital token comprises a non-fungible token, including an ERC-721.

7. The method of any one of the previous claims, wherein the AI prompt is made in plain text format.

8. The method of any one of the previous claims, wherein the prompt generator and the prompt executor are the same individual or different individuals.

9. The method of any one of the previous claims, wherein the AI prompt comprises a text, a question, an information, and/or a coding that the prompt generator communicates to the Al-based model to indicate what response the prompt generator is looking for.

10. The method of any one of the previous claims, wherein the Al-based model comprises a chatbot, a virtual assistant, a content generator, a translation system.

11. A system for Artificial Intelligence (Al) prompt enforcement, comprising:
at least one processor;
an Al-based model;
a database to store enforcement policies;
a decentralized and distributed network; and
a dedicated smart contract,
the at least one processor being configured to:
receive, from a prompt generator, an AI prompt for the AI model;
perform a natural language processing analysis over the received AI prompt to recognize some features thereof, said features including one or more of the following: entities involved, an intention behind the prompt, a context involved in the generative process of the prompt, and/or an overall sentiment of the prompt;
select an enforcement policy, comprising one or more conditions for the AI prompt, from the stored enforcement policies, and attach the one or more conditions to the AI prompt using the dedicated smart contract;
register the AI prompt as a digital asset to the decentralized and distributed network using the dedicated smart contract, providing a validated AI prompt as a result, the decentralized and distributed network having registered therein the prompt generator as the owner of the digital token;
receive a request to execute the validated AI prompt from a prompt executor;
check if the prompt executor satisfies the selected enforcement policy; and
forward the validated AI prompt to the Al-based model only if the selected enforcement policy is satisfied by the prompt executor.

12. The system of claim 11, wherein the decentralized and distributed network comprises a blockchain network.

13. The system of any one of the previous claims 11-12, wherein the Al-based model comprises a chatbot, a virtual assistant, a content generator, a translation system.

14. The system of any one of the previous claims 11-13, wherein the AI prompt is made in plain text format and comprises a text, a question, an information, and/or a coding that the prompt generator communicates to the Al-based model to indicate what response the prompt generator is looking for.

15. A non-transitory computer readable medium comprising code instructions that when executed by a computing device implement the method of any of claims 1 to 10.
